(19) Europäisches Patentamt / European Patent Office / Office européen des brevets

(11) **EP 3 367 720 A1**

(12) **EUROPEAN PATENT APPLICATION**

(43) Date of publication:
**29.08.2018 Bulletin 2018/35**

(51) Int Cl.:
***H04W 16/18*** (2009.01)    ***H04W 16/22*** (2009.01)

(21) Application number: **17157930.3**

(22) Date of filing: **24.02.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Nokia Solutions and Networks Oy
02610 Espoo (FI)**

(72) Inventors:
• **Atawia, Ramy
  2018 Antwerpen (BE)**
• **Gacanin, Haris
  2018 Antwerpen (BE)**

(74) Representative: **IP HILLS NV
Hubert Frère-Orbanlaan 329
9000 Gent (BE)**

(54) **DEPLOYMENT OF ACCESS NODES IN A WIRELESS NETWORK**

(57)    According to an embodiment, the disclosure relates to a method for determining a deployment of access nodes (501, 502, 503) comprising the step of determining a minimal amount of access nodes and a deployment of the access nodes comprising access node cooperation schemes for each client (521, 522) while the following set of constraints is fulfilled: i) when an access node connects a client, a received signal strength from the access node is equal or greater than a minimum signal strength threshold; and ii) for each client, the total throughput from access nodes according to the access cooperation scheme is equal or greater than a minimum throughput demand; and iii) for each access node, the capacity of the access node covers at least the throughput requirement of all clients; and iv) for each client, the client is served by at most the maximum number of cooperating access nodes it can be served by.

Fig. 5

## Description

### Technical Field

The present invention generally relates to a computer-implemented method and apparatus for the deployment of access nodes in a wireless communication network.

### Background

When deploying access nodes, an optimal amount of access nodes needs to be determined together with the location of each access point such that a wireless local network is obtained that can serve a desired amount of client nodes each with their specific throughput demands. Such access nodes may for example comprise Wi-Fi access points for which the location and operating channel is determined. The deployment may further comprise the selection of a master access point that serves as gateway, the determination of the backhaul links between the other access points and the master access point, either wirelessly or wired, and the selection of the appropriate frequency bands in which the access nodes will operate.

One way to determine a deployment is by maximizing the coverage of each access node, i.e., such that the power received by a client in any location is above a minimal power value.

Another way to determine a deployment is by maximizing the achievable throughput, for example by placing access nodes away from interfering nodes and closer to hotspot areas with large traffic demands and/or by minimizing the overlap between access nodes in order to decrease the contention.

### Summary

A problem of the above solutions is that the throughput demand of a client may exceed the available resources of a deployed access node.

Among others, the present disclosure solves the above problem by providing an access node deployment that is more optimal and can cover more clients with the same or even lesser amount of access nodes.

This object is achieved, according to a first aspect, by a computer-implemented method for determining a deployment of access nodes, ANs, comprising the step of

  a) determining a minimal amount of access nodes and a deployment of the access nodes comprising access node cooperation schemes for each client served by the access points while the following set of constraints is fulfilled:

- when an access node connects a client, a received signal strength by the client from the access node is equal or greater than a predetermined minimum signal strength threshold; and
- for each client, the total received throughput from one or more access nodes according to the access cooperation scheme is equal or greater than a predetermined minimum throughput demand of the client; and
- for each access node, the capacity of the access node covers at least the throughput requirement of all clients for that access node; and
- for each client, the client is served by at most the maximum number of cooperating access nodes it can be served by.

Hence, a deployment of access nodes does not only comprise the location of the access nodes and/or the selection of the appropriate frequency channels for the fronthaul and backhaul, but also comprises an access node cooperation scheme for each client node. According to an access node cooperation scheme, a client may also be served by multiple access nodes in a synchronized way, e.g., by time and/or frequency multiplexing. Examples of access node cooperation schemes are cooperative MIMO, networking MIMO and multi-user MIMO. The access node cooperation scheme is applied such that the cooperating access nodes provide the throughput demand of the client while not exceeding the maximum number of access nodes that the client can support, i.e., while staying within the MIMO capabilities of the client.

Because access node cooperation is taken into account, the access nodes are not necessarily deployed for minimal overlap in order to increase capacity but may even have a great overlap such that access node cooperation is better facilitated. This way, a better deployment is achieved with a same number of access nodes, i.e., more clients can be served or the total throughput will be higher for a predetermined throughput demand.

According to an embodiment, the determining step a) further comprises the following steps:

  b) determining a set (F) of deployments of a minimal amount of access nodes wherein, for each deployment (f) of the set, and for each access node of the deployment, such that a received signal strength by the client connected to the access node is equal or greater than a predetermined minimum signal strength threshold; and

c) determining for each deployment (f) and for each user an access node cooperation scheme comprising at least one access node and at most the maximum number of cooperating access nodes the client can be served by such that the total received throughput of the client is greater than the predetermined minimum throughput demand of the client; and

d) selecting from the set (F) of deployments a best performing deployment ($f_{opt}$) and corresponding access node cooperation schemes (M).

In other words, in a first step, a set of different deployments is determined such that all clients in the wireless network will receive from at least one access node a signal that is above a minimum signal strength threshold. For example, the different deployments may each comprise the same amount of access nodes but in each deployment the access points are located differently. Then, for each deployment and for each user the access node cooperation scheme is determined such that the throughput demand of the user is met as closely as possible. Finally, the best deployment is selected.

By this multi-step approach, a deployment is derived in a fast manner that meets all the above constraints.

In order to select the best deployment, the selecting step d) may further comprise the following steps:

e) calculating one or more performance scores for each deployment (f); and

f) selecting the best performing deployment ($f_{opt}$) based on the performance score.

Such a performance score may for example comprise at least one of the group of:

- a highest total throughput; and
- a total number of cooperating access nodes; and
- a total throughput demand of unsatisfied clients.

This way, the method can be customized to offer a trade-of between a client-centric or network-centric optimization.

According to an embodiment the determining step b) further comprises:

- g) determining the set (F) of deployments with a first amount of access nodes; and
- h) subsequently removing from the first set (F) the deployments for which a received signal strength by the client from and access node is smaller than the predetermined minimum signal strength threshold;
- i) when, after the removing, the set (F) is empty, increasing the first amount of access nodes and repeating steps g), h) and i); and, otherwise, proceeding to step c).

In other words, the set is determined by increasing the amount of access nodes until a set is found where at least one deployment satisfies the coverage constraint. For example, first the minimal amount of access nodes is chosen and then the set is constructed by varying the locations of the access nodes along a grid representing the area that the wireless network should cover, i.e., for each deployment, locating each of the first amount of access nodes.

It is an advantage that the method will always result in a set with the minimum amount of access nodes.

Advantageously the determining step g) further comprises, for each deployment, determining a master access node and slave access nodes; and wherein the slave access nodes are connected with the master access node by a respective backhaul link; and wherein the removing step h) further comprises removing from the first set (F) the deployments for which a received signal strength by an access from the master access node is smaller than the predetermined minimum signal strength threshold.

In other words, not only the coverage of the access nodes to the clients is taken into account, but also the coverage of the master access node, e.g., a gateway, to the other access nodes. This is especially useful when the backhaul link is also a wireless link, e.g., when the access nodes function as wireless range extenders. This way, wireless networks with range extenders can also be optimally deployed by taking into account their backhaul link.

According to a further embodiment, the determining step c) further comprises the following steps:

j) for each deployment, associating clients to the access nodes of the deployment thereby obtaining an access node cooperation scheme for the client; and

k) for each access node, when an access node's delivered throughput to a client is smaller than the predetermined minimum throughput demand of the client, associating neighbouring access points to the access point as cooperating access points for the client thereby obtaining an updated access node cooperation scheme for the client.

In other words, all clients are first all associated to an access node, for example by selecting the access node that offers the best signal strength. Then, it is first checked whether the client's throughput demand is covered by its associated access node. If not, neighbouring access points are associated with the access node for serving the respective client until the client's throughput demand is met. It is thus an advantage that the method will result in the optimal access node cooperation scheme for each client. When it is not necessary, the access node cooperation will be avoided.

Advantageously, the associating step k) further comprises the following steps:

m) calculating for each neighbouring access node an amount of vacant resources after serving the clients connected the respective neighbouring access node; and

n) associating only neighbouring access nodes with vacant resources.

This way, other clients are not compromised by the access node cooperation scheme of another client or access node.

More advantageously, the associating step k) further comprises the following step:

o) only associating an amount of neighbouring access nodes smaller or equal than the maximum number of cooperating access nodes for the client.

This way it is avoided that resources are allocated to clients that will not be able to make use of them.

More advantageously, the associating step k) further comprises the following step:

p) associating the neighbouring access nodes that deliver the highest total throughput to the client.

This way, all clients will get the highest throughput with the least amount of cooperating access nodes resulting in an optimal throughput while minimizing the complexity of the access nodes cooperation schemes.

According to a second aspect, the disclosure relates to a computer program product comprising a computer-executable instructions for performing the method according to the first aspect when the program is run on a computer.

According to a third aspect, the disclosure relates to a computer readable storage medium comprising the computer program product according to the second aspect.

According to a fourth aspect, the disclosure relates to a data processing system programmed for carrying out the method according to the first aspect.

## Brief Description of the Drawings

Fig. 1 illustrates steps performed for determining a deployment of access nodes according to an embodiment of the invention;

Fig. 2 illustrates steps for determining access node cooperation schemes for a set of deployments of access nodes; and

Fig. 3 illustrates steps for determining a set of deployments of access nodes according to an embodiment of the invention; and

Fig. 4 illustrates a deployment of access nodes determined according to the prior art.

Fig. 5 illustrates a deployment of access nodes determined according to an embodiment of the invention.

Fig. 6 illustrates a suitable computing system for performing the steps according to the various embodiments.

## Detailed Description of Embodiment(s)

The present disclosure relates to the deployment of access nodes, ANs, for creating a local wireless network (WLAN), for example within a building. By such a wireless network, clients are offered wireless access by connecting to one or more of the access nodes. Typically, the local wireless network is further connected to a wider public network or Wide Area Network (WAN) such as the Internet. The link between the clients and access nodes is further referred to as the fronthaul.

The access nodes are further connected to at least one master access node, mAN. This mAN has a further connection to the backbone network and is capable of communicating with the other managed Access Nodes, ANs, over a wired and/or wireless link. The link between the mAN and ANs is further referred to as the backhaul. In addition to serving clients and providing backhaul connection to ANs, the mAN further performs the synchronization and coordination functions among the ANs in order to obtain cooperating access nodes. Such cooperation is also referred to as network MIMO, multi-user MIMO or cooperative MIMO wherein MIMO refers to Multiple-Input-Multiple-Output. The mAN then foresees in coordinated scheduling and/or beamforming between the cooperating ANs. ANs that are providing network MIMO to a specific client in the wireless network are further referred to as providing an access node cooperation scheme for that client.

Embodiments of the invention provide in determining a best deployment of access nodes for a given set of client requirements, i.e., throughput requirements and location or working area of each client. A deployment comprises:

- an amount of deployed access nodes; and
- a location of each of the access points; and
- an access node cooperation scheme for each user.

The deployment is determined by minimizing the amount of access nodes while fulfilling a set of constraints. The minimization may be represented by the following equation:

$$\min\left\{\sum_{i=1}^{I}\delta_i\right\}$$

wherein

- $\delta_i$ is 1 when an AN is deployed at location $i$ and is zero when no AN is deployed at location $i$ ; and
- $I$ is the total amount of locations for deploying an AN.

The minimization is further performed for deployments that also fulfil the following constraints. The first constraint, further referred to as the coverage constraint, is that the signal power received by each client should surpass a predetermined minimum signal power. This first constraint may be represented by the following equation:

$$\delta_i p_{i,k} \geq \hat{P}\alpha_{i,k} \qquad \forall i \in I, \forall k \in K,$$

wherein

- $p_{i,k}$ is the signal power received by a client $k$ when connected with an access node at location $i$; and
- $K$ is the total amount of clients; and
- $\alpha_{i,k}$ is 1 if the AN at location $i$ will serve the client $k$ and zero otherwise; and
- $\hat{P}$ is a predetermined minimal amount of signal power that a client should receive from a connected AN.

The second constraint, further referred to as throughput constraint, is that the total throughput received at a client should be covered by the cooperating access nodes serving that client. The throughput constraint may be represented by the following equation:

$$\sum_{i=1}^{I}\delta_i\alpha_{i,k}r_{i,k} \geq \hat{R}_k \qquad \forall k \in K,$$

wherein:

- $r_{i,k}$ is the throughput received by client $k$ from the AN at location $i$ ; and

- $\hat{R}_k$ is the total throughput demand of the client $k$.

The third constraint, further referred to as the resource constraint, guarantees that an AN will not serve more clients than its resources allow, wherein the clients may be clients directly served by the AN or by cooperation with one or more other access nodes. The resource constraint may be represented by the following equation:

$$\sum_{k=1}^{K} \delta_i \alpha_{i,k} (\hat{R}_k / r_{i,k}) \le 1 \quad \forall i \in I$$

The fourth constraint, further referred to as the cooperation constraint, is that the amount of cooperating access nodes for a client should not exceed the maximum amount of nodes the client supports. The cooperation constraint may be represented by the following equation:

$$\sum_{i=1}^{I} \delta_i \alpha_{i,k} \le N_k \quad \forall k \in K$$

wherein $N_k$ is the maximum amount of cooperating nodes a client $k$ supports.

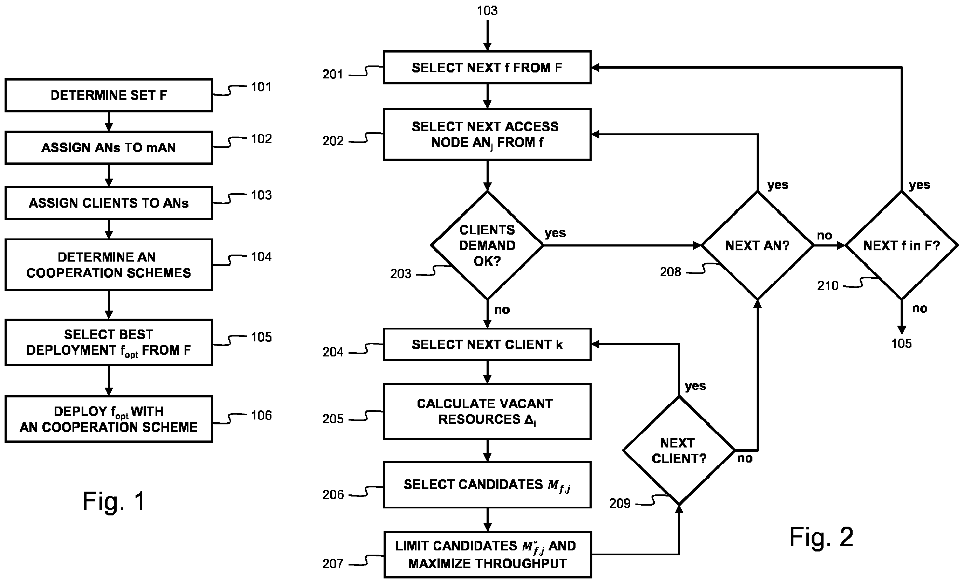

By determining a deployment that fulfils the above constraints, an optimal deployment is obtained, i.e., a deployment with the least amount of access nodes. Fig. 1 illustrates steps performed by a suitable computing system for determining such an optimal deployment according to the above equations. In a first step 101, a set F of deployments f is determined that all fulfil the coverage constraint for a minimal amount of access nodes. Then, in step 102, the ANs are assigned to a mAN, either by a wired or wireless backhaul. The mAN together with the connected ANs thereby determines the type of access node cooperation schemes that can be implemented. In the next step 103, all clients are assigned to an AN. The assignments in steps 102 and 103 may for example be done based on the coverage, i.e., clients are assigned to the AN that delivers the best signal power and ANs are likewise assigned to the mAN that delivers the best signal power.

In the next step 104, an access node cooperation scheme is determined for each of the clients such that the throughput constraint, resource constraint and cooperation constraint are fulfilled. After step 104, a set F of deployments is obtained wherein each deployment comprises the minimum amount of access nodes but with different locations and/or different access node cooperation schemes. Then, in the next step 105, the best deployment $f_{opt}$ is selected from the set F. This may be done by calculating performance scores for each of the deployments f and then selecting the best deployment $f_{opt}$ based on the performances scores. A performance score may for example comprise a highest total throughput achieved by client connected with the ANs according to the respective deployment, a total number of cooperating access nodes in a respective deployment or a total throughput demand of clients that are not served by the deployment. In the final step 106, the selected best deployment is rolled out.

Fig. 2 illustrates steps performed by a suitable computing system for determining the access node cooperation scheme under step 104 according to an embodiment of the invention. The process is iterative and starts in step 201 with selecting the next deployment f from the set F and then, in step 202, with selecting the next AN from the selected deployment f. In step 203, it is verified whether the AN alone can cover the throughput demand of all clients connected to the AN. If not, the method proceeds to step 204 and iterates over each client k that is connected to the selected AN. For each client, the amount of resources that are vacant in each neighbouring ANs is determined. The amount of resources that are vacant for a neighbouring AN $i$ may be obtained by the following formula:

$$\Delta_i = \max \left\{ 0, 1 - \sum_{k=1}^{K} \delta_i \alpha_{i,k} (\hat{R}_k / r_{i,k}) \right\}$$

wherein $\Delta_i$ is the amount of resources left in a neighbouring AN at location $i$ after having served its own associated clients. When $\Delta_i$ is greater than zero, then the neighbouring AN has resources left. Then, in step 206, all ANs with vacant resources are added to the set $M_{f,j}$, i.e., the set of possible cooperating ANs for deployment f and for AN j. In the next step 207, the subset $M_{f,j}^*$ is selected such that the total throughput to the user is maximized while the cooperation constraint of the user is fulfilled. This can be formulated according to the following maximization function and constraint:

$$\max\left\{\sum_{i=1}^{M_{f,j}} \Delta_i * r_{i,k} * \omega_i\right\}$$

$$Subject\,to: \sum_{i=1}^{M_{f,j}} \omega_i \leq N$$

wherein:

- $\omega_i$ is a decision variable that equals 1 when the AN at location $i$ is selected in the access node cooperation scheme and zero otherwise; and
- $k$ is the index of the client connected to AN $j$ ;
- $r_{i,k}$ is the throughput that the client $k$ gets when the AN at location $i$ is participating in the access node cooperation scheme.

Then, the method proceeds to step 209 where it verified whether other clients are also connected to the AN j. If so, steps 204-207 are also repeated for the next client. If not, or, if under step 203 it is determined that all the clients' demands are fulfilled by AN $j$, the method proceeds to step 208. In this step, it is verified whether there is another access node present in deployment f. If so, the method returns to step 202. If not, all access node cooperation schemes of a deployment have been determined and the method proceeds to step 210. In this step, it is determined whether there is a next deployment in the set F. If so, the method returns to step 201 to determine the access node cooperation schemes for the next deployment. If not, all the access node cooperation schemes of all ANs in all deployments have been determined and the method proceeds to step 105 as described above.

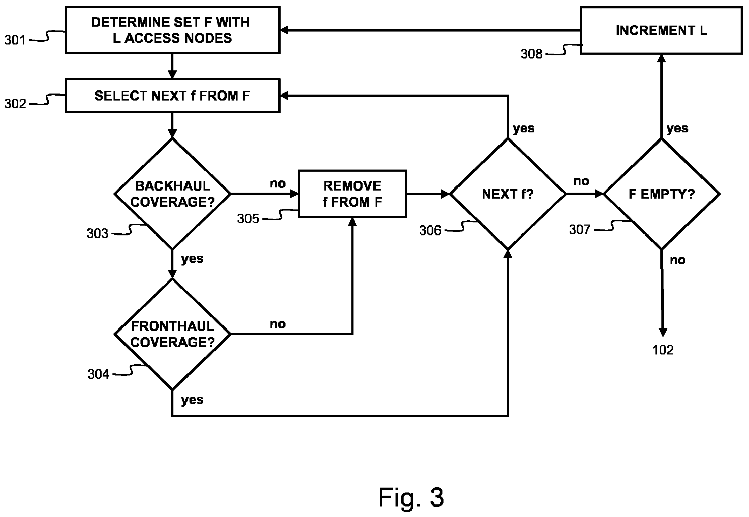

Fig. 3 illustrates steps performed by a suitable computing system for determining the set F under step 101 of Fig. 101 according to an embodiment of the invention. The method starts at step 301 wherein set F is initialized. To do so, an initial minimal amount of access nodes is selected, for example one. Then, possible deployments f are chosen for this minimal amount of access nodes. This may for example be done by dividing the deployment area into square grids wherein each grid is a candidate location for the deployment of one of the access nodes. Then, the method proceeds to step 302 where the coverage constraint is checked for each deployment of the set F. In order to do so, first the backhaul coverage of the AN is checked in step 303, i.e., it is verified if the received signal power or strength received at an AN is above a predetermined threshold. This constraint may be represented by the following equation:

$$\delta_i p_{i,m} \geq \hat{P}_B \qquad \forall i \in I, \forall m \in M$$

wherein:

- $p_{i,M}$ is the signal power received at the AN $i$ from a mAN $m$
- $\hat{P}_B$ is the minimum signal power that should be received by the AN $i$.

If the backhaul coverage is not sufficient, the method proceeds to step 305 and removes the deployment from the set F. If it is sufficient, the method proceeds to step 304 and verifies in a similar way if the signal strength at all clients received the connected AN is above a predetermined threshold. Again, if not sufficient, the deployment is removed from the set F under step 305. If the coverage is sufficient, the method proceeds to step 306. In this step, the method verifies if there is a next deployment in the set F and, if so, verifies the coverage for this next deployment by returning to step 302. If the coverage of all deployments has been tested, the method proceeds to step 307. Under this step 307 it is checked whether the set F is empty or not. If the set is empty, this means that there is no deployment possible for the current minimal amount of access node. The method therefore proceeds to step 308 where the minimum amount of access nodes is incremented and then returns back to step 301 to determine a new set F for the incremented minimal amount of access nodes. If the set is not empty, the method proceeds to step 102 as described above with reference to Fig. 1.

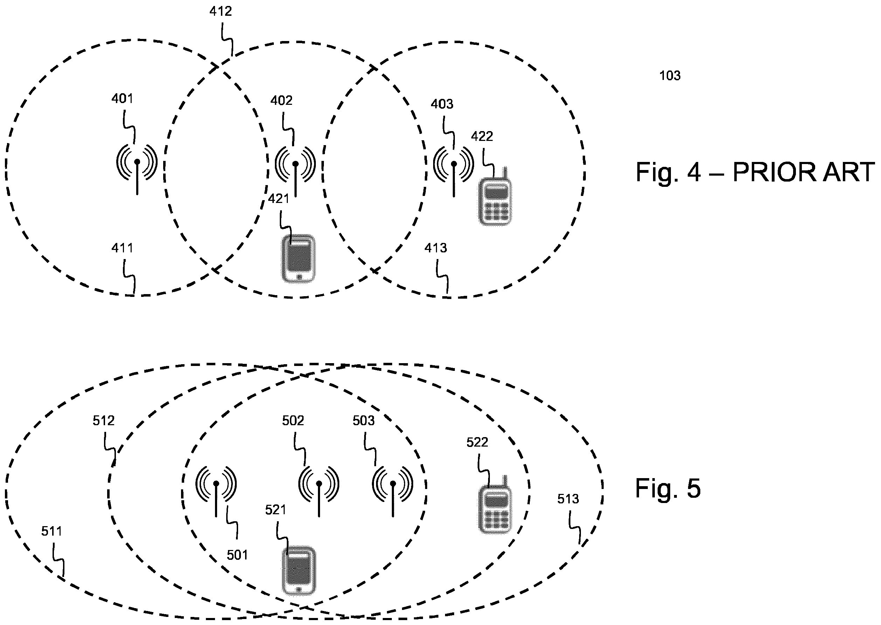

Fig. 4 illustrates a deployment of access nodes 401, 402 and 403 with a respective coverage 411, 412 and 413 as determined by a deployment method according to the prior art, i.e., the access nodes are deployed such that the amount of overlap is minimal. In this deployment, client 421 is served by access node 402 and client 422 is served by access node 403.

Fig. 5 illustrates a deployment of the same access nodes 501, 502 and 503 but wherein the deployment has been performed according to the embodiments of the invention. The coverages 511, 512 and 513 of the respective access nodes show a considerable overlap because the deployment is optimized towards access node cooperation instead of minimizing the overlap. Because of this, client 521 can profit from an access node cooperation scheme from the three access nodes and client 522 can profit from an access node cooperation scheme from access nodes 502 and 503. This deployment results in a higher throughput for the connecting clients with the same amount of access nodes.

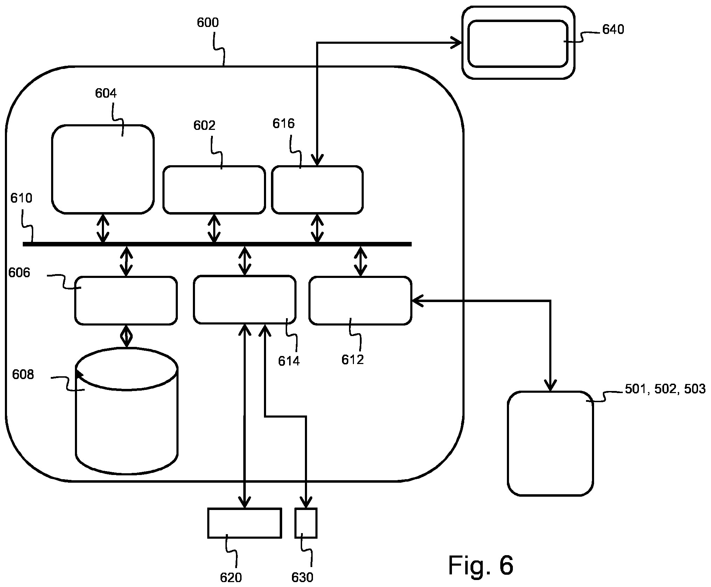

Fig. 6 shows a suitable computing system 600 according to an embodiment of the invention. Computing system 600 is suitable for performing the steps according to the above embodiments. Computing system 600 may in general be formed as a suitable general purpose computer and comprise a bus 610, a processor 602, a local memory 604, one or more optional input interfaces 614, one or more optional output interfaces 616, a communication interface 612, a storage element interface 606 and one or more storage elements 608. Bus 610 may comprise one or more conductors that permit communication among the components of the computing system 600. Processor 602 may include any type of conventional processor or microprocessor that interprets and executes programming instructions. Local memory 604 may include a random access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator to input information to the computing device 600, such as a keyboard 620, a mouse 630, a pen, voice recognition and/or biometric mechanisms, etc. Output interface 616 may comprise one or more conventional mechanisms that output information to the operator, such as a display 640, etc. Communication interface 612 may comprise any transceiver-like mechanism such as for example one or more Ethernet interfaces that enables computing system 600 to communicate with other devices and/or systems, for example with deployed or deployable access nodes 501, 502, 503. The communication interface 612 of computing system 600 may be connected to such another computing system by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage elements 608 above is described as a local disk, in general any other suitable computer-readable media such as a removable magnetic disk, optical storage media such as a CD or DVD, -ROM disk, solid state drives, flash memory cards, ... could be used. The system 600 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A computer-implemented method for determining a deployment of access nodes (501, 502, 503), ANs, comprising the step of

a) determining (101) a minimal amount of access nodes and (102, 103, 104) a deployment of the access nodes comprising access node cooperation schemes for each client served by the access points while the following set of constraints is fulfilled:

- when an access node connects a client (521, 522), a received signal strength by the client from the access node is equal or greater than a predetermined minimum signal strength threshold; and
- for each client, the total received throughput from one or more access nodes according to the access cooperation scheme is equal or greater than a predetermined minimum throughput demand of the client; and
- for each access node, the capacity of the access node covers at least the throughput requirement of all clients for that access node; and
- for each client, the client is served by at most the maximum number of cooperating access nodes it can be served by.

2. The method according to claim 1 wherein the access node cooperation schemes comprise network and/or cooperative MIMO.

3. The method according to claim 1 wherein the determining step a) further comprises the following steps:

b) determining (101) a set (F) of deployments of a minimal amount of access nodes wherein, for each deployment (f) of the set, and for each access node of the deployment, such that a received signal strength by the client connected to the access node is equal or greater than a predetermined minimum signal strength threshold; and
c) determining (104) for each deployment (f) and for each user an access node cooperation scheme comprising at least one access node and at most the maximum number of cooperating access nodes the client can be served by such that the total received throughput of the client is greater than the predetermined minimum throughput demand of the client; and
d) selecting (105) from the set (F) of deployments a best performing deployment ($f_{opt}$) and corresponding access node cooperation schemes (M).

4. The method according to claim 3 wherein the selecting step d) further comprises the following steps:

e) calculating one or more performance scores for each deployment (f); and
f) selecting the best performing deployment ($f_{opt}$) based on the performance score.

5. The method according to claim 4 wherein the one or more performance scores comprise at least one of the group of:

- a highest total throughput; and
- a total number of cooperating access nodes; and
- a total throughput demand of unsatisfied clients.

6. The method according to claim 3 wherein the determining step b) further comprises:

- g) determining (301) the set (F) of deployments with a first amount of access nodes; and
- h) subsequently removing (305) from the first set (F) the deployments for which a received signal strength by the client from and access node is smaller than the predetermined minimum signal strength threshold;
- i) when, after the removing, the set (F) is empty, increasing (308) the first amount of access nodes and repeating steps g), h) and i); and, otherwise, proceeding to step c).

7. The method according to claim 6 wherein the determining step g) further comprises, for each deployment, locating each of the first amount of access nodes.

8. The method according to claim 7 wherein the determining step g) further comprises, for each deployment, determining a master access node and slave access nodes; and wherein the slave access nodes are connected with the master access node by a respective backhaul link; and wherein the removing step h) further comprises removing (305) from the first set (F) the deployments for which a received signal strength by an access from the master access node is smaller than the predetermined minimum signal strength threshold.

9. The method according to claim 3 wherein the determining step c) further comprises the following steps:

j) for each deployment, associating (103) clients to the access nodes of the deployment thereby obtaining an access node cooperation scheme for the client; and

k) for each access node, when an access node's delivered throughput to a client is smaller than the predetermined minimum throughput demand of the client, associating (204-207) neighbouring access points to the access point as cooperating access points for the client thereby obtaining an updated access node cooperation scheme for the client.

10. The method according to claim 9 wherein the associating step k) further comprises the following steps:

m) calculating (205) for each neighbouring access node an amount of vacant resources after serving the clients connected the respective neighbouring access node; and

n) associating (206) only neighbouring access nodes with vacant resources.

11. The method according to claim 9 wherein the associating step k) further comprises the following step:

o) only associating (207) an amount of neighbouring access nodes smaller or equal than the maximum number of cooperating access nodes for the client.

12. The method according to claim 11 wherein the associating step k) further comprises the following step:

p) associating (207) the neighbouring access nodes that deliver the highest total throughput to the client.

13. A computer program product comprising a computer-executable instructions for performing the method according to claim 1 when the program is run on a computer.

14. A computer readable storage medium comprising the computer program product according to claim 13.

15. A data processing system programmed for carrying out the method according to claim 1.

103

201 — SELECT NEXT f FROM F

202 — SELECT NEXT ACCESS NODE $AN_j$ FROM f

203 — CLIENTS DEMAND OK? —yes→ NEXT AN? (208) —no→ NEXT f in F? (210)

NEXT AN? —yes (up to 202)

NEXT f in F? —yes (up to 201)

NEXT f in F? —no→ 105

CLIENTS DEMAND OK? —no↓

204 — SELECT NEXT CLIENT k

205 — CALCULATE VACANT RESOURCES $\Delta_i$

206 — SELECT CANDIDATES $M_{f,j}$

207 — LIMIT CANDIDATES $M^*_{f,j}$ AND MAXIMIZE THROUGHPUT

209 — NEXT CLIENT? —yes→ (up to 204) / —no→ (up to 208)

Fig. 2

DETERMINE SET F — 101

ASSIGN ANs TO mAN — 102

ASSIGN CLIENTS TO ANs — 103

DETERMINE AN COOPERATION SCHEMES — 104

SELECT BEST DEPLOYMENT $f_{opt}$ FROM F — 105

DEPLOY $f_{opt}$ WITH AN COOPERATION SCHEME — 106

Fig. 1

11

Fig. 3

EP 3 367 720 A1

Fig. 4 – PRIOR ART

103

Fig. 5

13

Fig. 6

Europäisches
Patentamt

European
Patent Office

Office européen
des brevets

## EUROPEAN SEARCH REPORT

Application Number

EP 17 15 7930

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 329 120 B1 (TELECOM ITALIA LAB SPA [IT]) 24 December 2008 (2008-12-24)<br>* paragraph [0001] *<br>* paragraph [0006] - paragraph [0008] *<br>* paragraph [0015] *<br>* paragraph [0020] - paragraph [0030] *<br>* paragraph [0042] - paragraph [0045] *<br>* paragraph [0047] - paragraph [0053] *<br>----- | 1-15 | INV.<br>H04W16/18<br><br>ADD.<br>H04W16/22 |
| X | US 2014/357284 A1 (ALMOGHATHAWI YASSER A [SA] ET AL) 4 December 2014 (2014-12-04)<br>* paragraph [0010] *<br>* paragraph [0016] - paragraph [0017] *<br>* paragraph [0029] - paragraph [0035] *<br>----- | 1-15 | |
| X | US 5 574 466 A (REED JOHN D [US] ET AL) 12 November 1996 (1996-11-12)<br>* column 1, line 12 - line 16 *<br>* column 11, line 60 - column 13, line 33 *<br>----- | 1-15 | |
| X | US 2012/108246 A1 (MONOGIOUDIS PANTELIS [US]) 3 May 2012 (2012-05-03)<br>* paragraph [0006] - paragraph [0019] *<br>* paragraph [0047] - paragraph [0050] *<br>* paragraph [0052] - paragraph [0061] *<br>* paragraph [0067] - paragraph [0077] *<br>* paragraph [0094] *<br>----- | 1-15 | TECHNICAL FIELDS SEARCHED (IPC)<br><br>H04W<br>H04B |

The present search report has been drawn up for all claims

| Place of search | Date of completion of the search | Examiner |
|---|---|---|
| Berlin | 22 September 2017 | López Pérez, Mariano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 7930

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2017

| Patent document cited in search report | | Publication date | Patent family member(s) | | Publication date |
|---|---|---|---|---|---|
| EP 1329120 | B1 | 24-12-2008 | AT | 418848 T | 15-01-2009 |
| | | | AU | 1519202 A | 06-05-2002 |
| | | | BR | 0114950 A | 11-01-2005 |
| | | | CA | 2426930 A1 | 02-05-2002 |
| | | | CN | 1478361 A | 25-02-2004 |
| | | | EP | 1329120 A1 | 23-07-2003 |
| | | | IT | T020001017 A1 | 29-04-2002 |
| | | | US | 2004014476 A1 | 22-01-2004 |
| | | | WO | 0235872 A1 | 02-05-2002 |
| US 2014357284 | A1 | 04-12-2014 | NONE | | |
| US 5574466 | A | 12-11-1996 | AU | 679877 B2 | 10-07-1997 |
| | | | CA | 2195216 A1 | 05-12-1996 |
| | | | EP | 0772893 A1 | 14-05-1997 |
| | | | FI | 965261 A | 28-01-1997 |
| | | | JP | H10503915 A | 07-04-1998 |
| | | | US | 5574466 A | 12-11-1996 |
| | | | WO | 9638875 A1 | 05-12-1996 |
| US 2012108246 | A1 | 03-05-2012 | NONE | | |

EPO FORM P0459

For more details about this annex : see Official Journal of the European Patent Office, No. 12/82